# EUROPEAN PATENT SPECIFICATION

(11) **EP 3 988 833 B1**
(45) Date of publication and mention of the grant of the patent: **29.05.2024**
(21) Application number: 21203512.5
(22) Date of filing: 19.10.2021
(51) Int. Cl.: F16L 37/086, F23J 13/02

(54) **DUCT SECTION AND METHOD FOR MANUFACTURING A DUCT SECTION**
KANALABSCHNITT UND VERFAHREN ZUR HERSTELLUNG EINES KANALABSCHNITTS
SECTION DE CONDUIT ET PROCÉDÉ DE FABRICATION D'UNE SECTION DE CONDUIT

(30) Priority: 20.10.2020 NL 2026716
(43) Date of publication of application: 27.04.2022
(73) Proprietor: Lewo B.V., 3931 PC Woudenberg (NL)
(72) Inventor: FRATERMAN, Marcel, 3931 PC Woudenberg (NL); MATTI, Yousif, 3931 PC Woudenberg (NL); VAN MAAREN, Roeland Wouter, 3931 PC Woudenberg (NL); ROSKAM, Willem, 3931 PC Woudenberg (NL)
(74) Representative: Peters, Sebastian Martinus

(56) References cited:
- DE-A1- 2 829 938
- DE-A1-102007 004 335
- US-A- 4 114 927
- US-A- 5 667 329
- US-A- 5 685 044

## Description

### BACKGROUND

The invention relates to a duct section configured for connecting to one or more other duct sections for creating a duct system for delivering and/or removing gaseous substances. Furthermore, the invention relates to a method for manufacturing a duct section, and to a method for manufacturing a duct system by interconnecting individual duct sections together.

DE 20 2007 013 854 U1 discloses a pipe section with a socket section and a matching insert section for interconnecting pipe sections together. The described socket section has at least two pairs of cut-outs extending in an axial direction that form a spring-like tongue in between each pair of two cut-outs, wherein each tongue contains a first dent that projects inwards. The matching insert section has at least two inwards facing second dents, such that when the insert section is inserted in the socket section, the first dents fall into the second dents present on the insert section which results in a snap connection between the pipe sections. In order to further secure the interconnection, a metal clamping band is arranged around the socket section in order to prevent that the first dents move out of the second dents. Furthermore, both sections contain a rib around the circumference of the pipe which, when the two sections are placed inside each other, the metal clamping band can be placed in between the ribs and over the two pipe sections to ensure a stable and lasting interconnect.

### SUMMARY OF THE INVENTION

A problem of the known pipe sections is that the use of a clamping band requires the often cumbersome application of mechanical fasteners by a technician in the field during on-site assembly. In particular, the need for arranging the metal clamping band around each interconnection of pipe sections makes the on-site assembly labor-intensive.

It is an object of the present invention to provide a duct section configured for interconnecting one or more duct sections in a manner that does not require the use of metal clamping bands nor the use of mechanical fasteners such as screws or bolts, which provides for a quick and convenient means to assemble and disassemble duct sections into a duct system.

According to a first aspect, the invention provides a duct section configured for connecting to one or more other duct sections for creating a duct system for delivering and/or removing gaseous substances, wherein the duct section comprises a circumferential outer wall with an inner surface and an outer surface, wherein the duct section comprises a first end with a male end portion configured to fit in a female end portion of one of the one or more other duct sections, wherein said female end portion comprises a receiving opening in a circumferential wall of the female end portion, wherein the male end portion comprises an opening in a circumferential wall of the male end portion, wherein said opening is spaced a first distance apart from the first end, wherein the male end portion comprises a protruding member that is arranged to pass through the opening in the male end portion projecting outwards with respect to the outer surface of the outer wall and, when interconnected with said one of the one or more other duct sections, passes through the receiving opening of the female end portion, and wherein said protruding member is supported by a resilient member which is arranged inside the duct section, in particular, wherein the duct section is a double wall duct section or a double wall concentric duct section, comprising a circumferential inner wall that is enclosed by and spaced apart from the circumferential outer wall.

By inserting the male end portion of the duct section in a female end portion of an other duct section, a stable interconnection is formed, due to the locking action of the protruding member when the protruding member passes through the receiving opening of the female end. As a result, the interconnect does not require the use of additional stabilization means after the duct section is inserted in the other duct section, such as a metal clamping band or mechanical fasteners, which provides for a quick and convenient means to assemble duct sections into a duct system.

Furthermore, the protruding member extends in radial direction out the receiving opening of the female end portion and is accessible from the outside of the duct section after assembly in to the duct system. As a result the duct section can be readily dissembled by a technician, by pushing the protruding member inwards against the resilient member to move out of the receiving opening of the female end portion.

Additionally, the lack of metal clamping bands or mechanical fasteners combined with a substantially smooth outer surface of the rest of the duct section, results in a duct system with a substantially smooth outer wall when the one or more sections are assembled in to the duct system. This leads to an esthetically pleasing outer surface of the assembled duct system, which allows the duct system to be placed in plain sight. This effect is enhanced when the duct sections are oriented such, that the protruding member is hidden from view, by for example arranging the protruding member such that it faces towards a nearby wall.

It is noted that within this text, the term 'gaseous substances' comprises, *inter alia*, combustion gasses, smoke, steam, airborne particulates and/or air that is unfiltered, filtered, cooled and/or heated. In addition, the duct section can also be envisioned to comprise other components and/or active sections, such as filters, fan-housings, intake and outtake ducts, and/or heating, ventilation and air conditioning (HVAC) components. Furthermore, the duct section can also be envisioned to comprise shapes other than a straight-shape, such as curved or T, X or Y-like shapes with a multitude of male end portions and/or a multitude of female end portions, and/or terminals or caps.

In an embodiment, the resilient member comprises a first end and a second end and wherein the protruding member is attached to the first end. In particular, at least a part of the resilient member between the first and second end comprises a resilient part or a resilient material, which provides spring-like properties.

In an embodiment, the second end of the resilient member is connected to the inner surface of the outer wall, preferably wherein the second end of the resilient member is fixed to the inner surface of the outer wall. By connecting, preferably fixing, the second end of the resilient member to the inner surface of the outer wall, the resilient member can be arranged substantially flat against the inner surface, thus without substantially protruding radially inwards into the interior of the duct section, for, in use, limiting the exposure of the resilient member to the gaseous substances inside the duct section.

In an embodiment, the circumferential inner wall comprises an outer surface which is facing the inner surface of the outer wall, and wherein the second end of the resilient member is connected to the outer surface of the inner wall. Preferably, the resilient member is not connected to the circumferential outer wall of the duct section, and no connecting or fixing methods need to be performed to the outer wall. Accordingly, this embodiment allows to avoid blemishes on the outer wall of the duct section from manufacturing steps for connecting or fixing the resilient member such as welding that are visible after assembly of the individual duct sections into the duct system.

In an embodiment, the circumferential inner wall comprises an outer surface which is facing the inner surface of the outer wall, and wherein the resilient member is clamped between the inner surface of the outer wall and the outer surface of the inner wall. Hence, the resilient member does not need to be attached during the manufacturing process, which simplifies and/or shortens the manufacturing process. Furthermore, the resilient member can be readily installed or exchanged in the field by a technician, and does not need to be inserted during manufacturing. Accordingly, the duct sections are more convenient to transport and package due to the absence of protruding members in the duct section outer surface.

In an embodiment, the resilient member and/or the protruding member is configured to substantially close off the opening of the male end portion of the duct section when the duct section is connected to one of the one or more other duct sections. Hence, as the protruding member substantially closes off the opening, a substantially gas-tight interconnect can be obtained.

In an embodiment, the resilient member and/or the protruding member comprises a sealing member, for example a rubber or a rubber-like sealing ring, around the protruding member. Said sealing member is preferably configured to seal the opening of the male end portion of the duct section and thus to improve the gas-tightness of the interconnect.

In an embodiment, the resilient member comprises a leaf spring, a coil spring or a volute spring, preferentially wherein the leaf spring, the coil spring or the volute spring are made of metal. The use of a spring can improve the reversibility of the duct section interconnect. Additionally, the use of metal springs ensures compatibility with the heat and/or corrosive nature of some gaseous substances such as smoke.

In an embodiment, in particular when the resilient member comprises a leaf spring, the resilient member is oriented along an axial direction of the male end portion of the duct section. In particular in circle cylindrical duct sections, arranging the resilient member in the axial direction allows to position the resilient member substantially flat against the inner surface of the circumferential outer wall, resulting in a minimal protrusion of the resilient member to the inside of the duct section.

In an embodiment, in particular when the resilient member comprises a leaf spring, the resilient member is oriented in a circumferential direction of the male end portion of the duct section. Hence, any blemish, defect or spot that results from attaching, for example welding, the resilient member to the duct section can be hidden from view after inserting the male end portion of the duct section in the female end portion of an other duct section.

In an embodiment, the protruding member is cylindrical or substantially cylindrical in shape. The cylindrical or substantially cylindrical shape allows for manufacturing convenience, and assists to avoid alignment issues during manufacture due to the radial symmetry of the protruding member.

In an embodiment, the protruding member comprises a beveled edge at a side facing away from the resilient member. On the one hand, the beveled edge provides a smooth distal end of the protruding member, which reduces the chances that anything may get caught on the protruding member. On the other hand, the beveled edge allows to facilitate joining duct sections together.

In an embodiment, an outer diameter of the male end portion is smaller than an outer diameter of the rest of the duct section by approximately twice a wall thickness of the circumferential outer wall. In particular, when connecting this duct section to a female end portion of an other duct section with substantially the same wall thickness, the combination of both duct sections and the interconnection forms a substantially smooth outer surface.

In an embodiment, the male end portion of the duct section is configured to extend over a distance in a range between 40 - 70 mm, preferably the male end portion of the duct section extends over a distance of approximately 50 mm, and is preferably configured to insert the male end portion in said female end portion of one of the one or more other duct sections over said distance. Due to the substantial overlap between the male end portion of the duct section and the female end portion of the other duct section, the bending resistance of the interconnect is improved when the duct sections are assembled in the duct system. In addition, the substantial overlap can allow for a stable interconnect even when only a single resilient member, protruding member and opening are present on the male end portion of the duct section

In an embodiment, the first distance from the first end of the male end portion is approximately half the length of the male end portion. Hence, positioning the protruding member, the opening and the receiving opening in an axial direction substantially half way the male and female end portions allows to obtain a sturdy interconnect.

In an embodiment, the duct section comprises a second end with a female end portion formed to fit around a male end portion of an other duct section, wherein the female end portion of the duct section comprises a receiving opening in a circumferential wall spaced a second distance from the second end, and wherein the receiving opening is configured such that the protruding member of the other duct section with the male end portion passes through the receiving opening of the female end portion of the duct section, when the female end portion of the duct section is connected to the male end portion of the other duct section. Accordingly, the duct section according to this embodiment comprises a first end with a male end portion and a second end with a female end portion, which allows to use multiple identical duct sections according to this embodiment for creating a duct system for delivering and/or removing gaseous substances.

In an embodiment, the duct section is configured to provide a duct system part comprising at least two interconnected duct sections, wherein said duct system part comprises a substantially constant outer diameter, in particular a substantially continuous and smooth outer surface. Accordingly, the substantially continuous and smooth outer surface provided by this embodiment can provide an esthetically pleasing surface, which is particularly appropriate when placing the duct system in plain sight.

According to a second aspect, the invention provides a duct section configured for connecting to one or more other duct sections for creating a duct system for delivering and/or removing gaseous substances, wherein the duct section comprises a second end with a female end portion formed to fit around a male end portion of an other duct section as described above, wherein the female end portion comprises a receiving opening spaced a second distance from the second end, and wherein the receiving opening is configured such that the protruding member of the other duct section with the male end portion passes through the receiving opening of the female end portion of the duct section, when the female end portion of the duct section is connected to the male end portion of the other duct section. This duct section is accordingly configured for connecting to one or more other duct sections with a male end portion as described above, for creating a duct system. The duct section is a double wall duct section or a double wall concentric duct section, comprising a circumferential inner wall that is enclosed by and spaced apart from the circumferential outer wall.

In an embodiment, the female end portion has an outer diameter that is substantially equal to an outer diameter of the circumferential outer wall of the duct section. Hence, the female end portions forms a substantially smooth outer surface with respect to the rest of the duct section. Additionally, the substantially smooth outer surface can result in an esthetically pleasing duct section and convenience in shipping.

In an embodiment, the duct section is configured to provide a duct system part comprising at least two interconnected duct sections, wherein said duct system part comprises a substantially constant outer diameter, in particular a substantially continuous and smooth outer surface. Accordingly, the substantially continuous and smooth outer surface provided by this embodiment can provide an esthetically pleasing surface, which is particularly appropriate when placing the duct system in plain sight.

According to a third aspect, the invention provides a method for manufacturing a duct section, wherein the method comprises the steps of:
- providing a duct section which comprises a circumferential outer wall with an inner surface and an outer surface, wherein the duct section comprises a first end with a male end portion formed to fit in a female end portion of one of one or more other duct sections, wherein the male end portion comprises an opening spaced a first distance from the first end, wherein the duct section is a double wall duct section or a double wall concentric duct section;
- providing a protruding member which is supported on a resilient member; and
- arranging the protruding member to pass through the opening with the resilient member at the inside of the male end portion of the duct section.

According to a fourth aspect, the invention provides a method for manufacturing a duct system by interconnecting individual duct sections together by placing the male end portion of at least one duct section according to the first aspect of the invention as described above, inside the female end portion of at least one other duct section according to the second aspect of the invention as described above, wherein the method comprises the step of:
- positioning the receiving opening of the female end portion such that the protruding member of the male end portion passes through the receiving opening of the female end portion.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
figure 1 schematically shows several pipe sections connected together to form a pipe system similar to what is known in the prior art;
figure 2 schematically shows several duct sections connected together to form a duct system according to an example of the present invention;
figure 3 schematically shows a cross section of an example of a male end portion not according to the invention; It
figures 4 and 5 schematically show cross-sections of different examples of a male end portion of the duct section along plane III-III of figure 2;
figure 6A schematically shows a detailed view of an outside surface of an outer wall of an interconnecting region of an example of the present invention;
figure 6B schematically shows a detailed view of an inside surface of the outer wall of the example of figure 6A;
figure 7A schematically shows an example of a resilient member which comprises a sealing member; and
figure 7B schematically shows an example of a protruding member which comprises a sealing member.

### DETAILED DESCRIPTION OF THE INVENTION

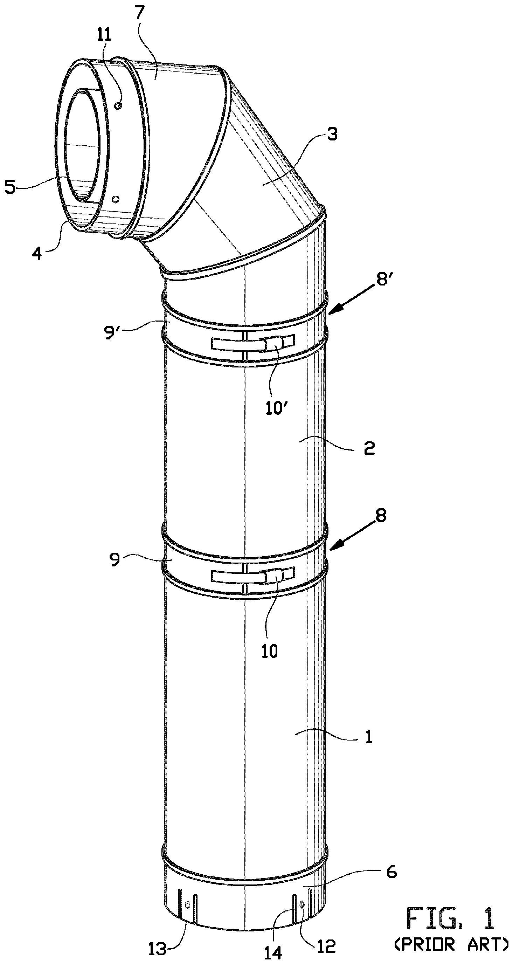

Figure 1 schematically shows several double wall concentric flue-gas pipe sections 1,2,3 similar to that of DE 20 2007 013 854 U1. Each of the pipe sections contain a socket section and a matching insert section for interconnecting pipe sections into a pipe system.

The first pipe section 1, shown in figure 1, contains a socket section 6 at a first end, which is shown in an unconnected state, which has at least two cutouts 14 in an axial direction that form a spring-like tongue 13 in between said two cutouts 14. The spring-like tongue 13 contains an inward protruding first dent 12. The spring-like tongue is positioned in such a way that the inwards protruding first dent 12 can interface with matching inwards protruding second dent 11 on an insert section 7 to form a pipe interconnect 8,8'.

At a second end, opposite to the first end, the first pipe section 1, has an insert section which is inserted in a socket section of a second pipe section 2, forming the interconnect 8. The interconnect 8 is surrounded by a metal clamping belt 9, which is fastened with a clamping mechanism 10. The metal clamping belt 9 is necessary to stabilize the interconnect 8, in particular to prevent that the first dent moves out of connection with the second dent. The clamping mechanism 10 attached to the interconnect 8 is commonly held in place by one or more mechanical fasteners such as screws or bolts.

The second pipe section 2 is further connected to a third pipe section 3, forming interconnect 8'. Here, an insert section of the second pipe section 2 is inserted in a socket section of the third pipe section 3. The interconnect 8' is again surrounded by a metal clamping belt 9', which is fastened with a clamping mechanism 10'.

The third pipe section 3 in this example is a 90 degree bend. The third pipe section 3 has an insert section 7, which is shown in an unconnected state, with a multitude of inwards protruding second dents 11. From the schematic view of the internal structure as depicted at the unconnected end of the third pipe section 3, the pipe system comprises double wall concentric pipe sections, comprising an inner wall 5 and an outer wall 4.

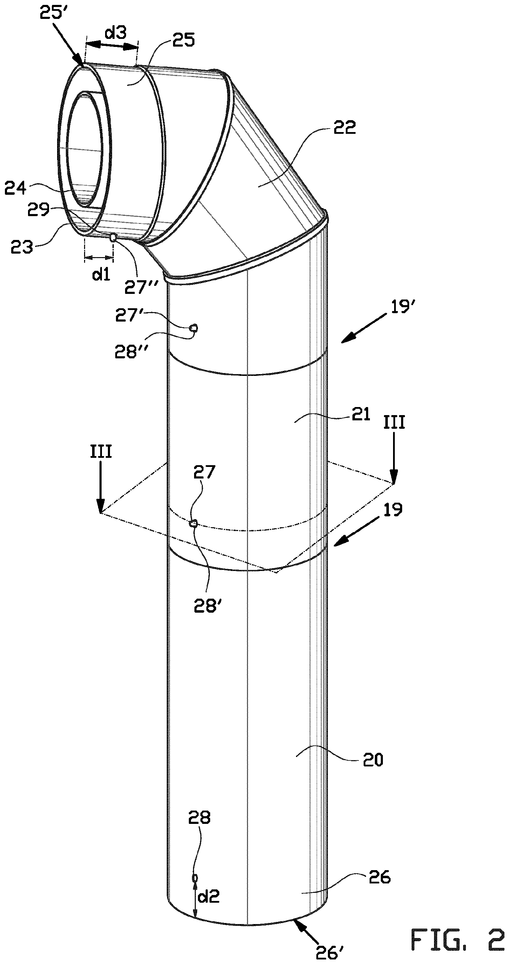

Figure 2 schematically shows several double wall concentric duct sections 20, 21, 22, according to an example of the present invention, which are connected together to form part of a duct system. Each one of the first, second and third duct sections 20, 21, 22, comprises a first end with a male end portion or insert section and a second end with a female end portion 26 or socket section. In this example, the male end portions and the female end portions of all duct sections 20, 21, 22 have the same construction.

The female end portion 26 of the first duct section 20 is shown unconnected. The male end portion of the first duct section 20 is inserted in the female end portion of a second duct section 21 forming a first interconnect 19. The male end portion of the second duct section 21 is inserted in the female end portion of the third duct section 22 forming a second interconnect 19'. The male end portion 25 of the third duct section 22 is shown unconnected.

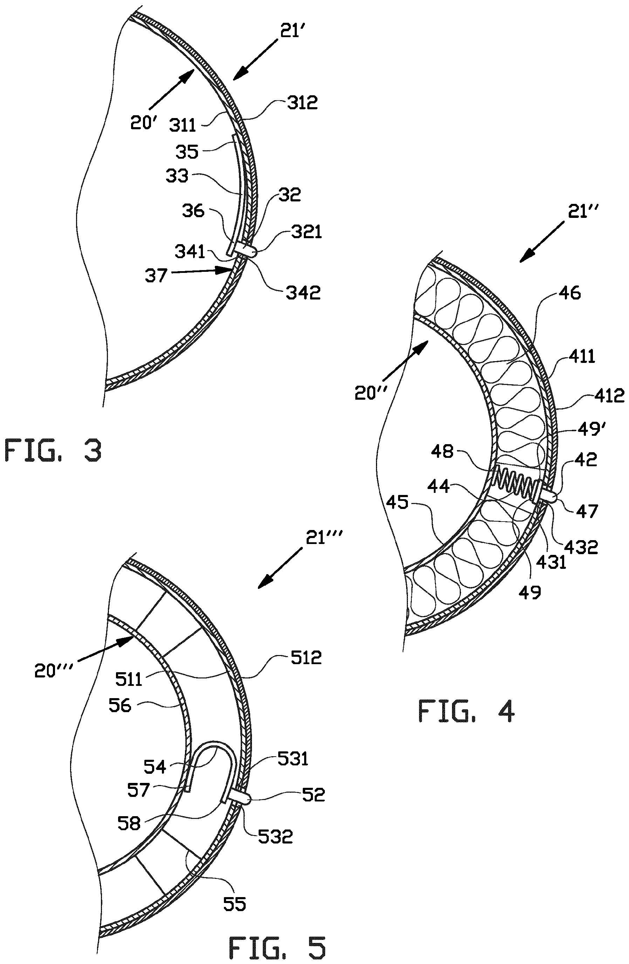

As already indicated above, all male end portions have the same construction, which construction is explained with reference to the male end portion of the third duct section 22. This male end portion 25 comprises an opening 29 in a circumferential wall 23 of the male end portion, which is spaced a first distance d1 from the first end 25'. The male end portion further comprises a protruding member 27", which passes through the opening 29 in the male end portion 25. The protruding member 27" is attached to a resilient member (not shown) which is arranged inside the duct section 22. There are various ways to arrange the resilient member inside the duct section as will be explain more detail with reference to figures 3, 4 and 5 below.

It is noted that the male end portion 25 of the duct section is configured to extend over a distance d3 in a range between 40 - 70 mm, preferably the male end portion of the duct section extends over a distance d3 of approximately 50 mm, and is preferably configured to position the male end portion in said female end portion of one of the one or more other duct sections, over said distance d3, in order to provide a stable and durable interconnection, in particular to prevent a wobbly interconnection, between adjacent duct sections. It is further noted that in the example shown in figure 2, the first distance d1 is approximately half the distance d3.

All female end portions have the same construction, which construction is explained with reference to the female end portion 26 of the first duct section 20. The female end portion 26 has a receiving opening 28, which is arranged spaced apart over a second distance d2 from the second end 26' .

As schematically presented in figure 2, at the interconnect 19, 19', the male end portion of the respective duct section 22, 21 comprises a protruding member 27, 27', which passes both through the opening in the male end portion of duct section (not shown) and through the receiving opening 28', 28" on the female end portion of a duct section 21, 22.

While the duct system shown in figure 2 exemplifies two straight duct sections and one curved duct section, the duct sections can also be envisioned to comprise active sections and/or components such as filters, fan-housings or intake and outtake ducts. In addition, the individual duct sections can be envisioned to comprise duct sections with different shapes such a T, X or Y-shaped duct, or with a multitude of male and female end portions, and/or terminals or caps.

Figures 3, 4 and 5 show a part of a schematic cross-section views of different examples of a male end portion of a duct section arranged in a female end portion of an adjacent duct section, along plane III-III in figure 2.

Figure 3 shows a first example not according to the invention of a male end portion of the duct section 20' arranged inside a female end portion of the adjacent duct section 21'.In this example, the duct sections 20', 21' are single wall duct sections, each with an outer wall 311, 312. Both the outer wall 311 of the male end portion and the outer wall 321 of the female end portion are provided with a through hole; in particular with the opening 341 and the receiving opening 342 respectively, which are configure to align with each other when the male end portion is arranged in the female end portion. The male end portion of the duct section 20'is provided with a resilient member, in particular a leaf spring 33, which in this example extends in a substantially circumferential direction of the male end portion of the duct section 20'. Said leaf spring 33 comprises a proximal end 35 which is connected to the inner surface of the outer wall 311. The proximal end 35 is preferably fixed to the inner surface of the outer wall 311, for example by means of a welding or a glue connection. The distal end 36 of the leaf spring 33 comprises a protruding member 32, which is configured so that the protruding member 32 passes through the opening 341 and the receiving opening 342 when the male end portion is arranged in the female end portion and the opening 341 and the receiving opening 342 align with each other. In particular, the leaf spring 33 is configured to push the protruding member 32 in a radial direction outwards, preferably such that the distal end 36 of the leaf spring 33 pushes against the inner surface 37 of the outer wall 311 of the male end portion. The leaf spring 33 allows to push the protruding member 32 inwards, in particular against the outward pushing spring force of the leaf spring 33, in order to allow to move outer wall 312 of the female end portion over the outer wall 311 of the male end portion until the receiving opening 342 comes in line with the opening 341 of the male end portion and the protrusion 32 is pushed radially outward to pass through the receiving opening 342 in order to establish a fixed coupling between the male end portion of the duct section 20' inside the female end portion of the adjacent duct section 21', as schematically shown in figure 3. In this coupled state as schematically shown in figure 3, the protruding member 32 is accessible from the outside of the coupled duct sections 20', 21' and can be pushed inwards in order to move the protruding member 32 substantially out of the receiving opening 342 so that the female end portion can move over the male end portion in order to disconnect the duct sections 20', 21'.

In the example schematically shown in figure 3, the protruding member 32 is substantially cylindrical, preferably circle cylindrical, and is provided with a beveled edge 321 at a side facing away from the distal end 36 of the leaf spring 33. In the example of figure 3, the beveled edge 321 is part of a rounded top of the circle cylindrical protruding member 32.

It is noted that the connection of the proximal end 35 of the leaf spring 33 to the inner surface of the outer wall 311 as exemplified in figure 3, is also applicable to the inner surface of the outer wall of a double wall duct sections and/or double wall concentric duct sections as shown in figure 2.

Figure 4 shows a second example of a male end portion of the duct section 20" arranged inside a female end portion of the adjacent duct section 21". The duct section's 20", 21" of this second example are double walled duct sections with an inner wall 45 and an outer wall 411. The space between the inner wall 45 and the outer wall 411 is filled with an insulating material 46. It is noted that the female end portion of the adjacent duct section 21" does not comprise the inner wall and insulating material.

Again, both the outer wall 411 of the male end portion and the outer wall 412 of the female end portion are provided with a through hole; in particular with the opening 431 and the receiving opening 432 respectively, which are configure to align with each other when the male end portion is arranged in the female end portion. The male end portion of the duct section 20" is provided with a resilient member, in particular, a coil spring 44, which in this example extends in a substantially radial direction of the male end portion of the duct section 20". Said coil spring 44 comprises a proximal end 48 which is connected to an outer surface of the inner wall 45. The proximal end 48 is preferably fixed to the inner surface of the outer wall 311, for example by means of a welding, screw or a glue connection. The distal end 49 of the coil spring 44 comprises a protruding member 42, which is configured so that the protruding member 42 passes through the opening 431 and the receiving opening 432 when the male end portion is arranged in the female end portion and the opening 431 and the receiving opening 432 align with each other. In particular, the coil spring 44 is configured to push the protruding member 42 in a radial direction outwards, preferably such that the distal end 49 of the coil spring 44 pushes against the inner surface of the outer wall 411 of the male end portion. The coil spring 44 allows to push the protruding member 42 inwards, in particular against the outward pushing spring force of the coil spring 44, in order to allow to move outer wall 412 of the female end portion over the outer wall 411 of the male end portion until the receiving opening 432 comes in line with the opening 431 of the male end portion and the protrusion 42 is pushed radially outward to pass through the receiving opening 432 in order to establish a fixed coupling between the male end portion of the duct section 20" inside the female end portion of the adjacent duct section 21", as schematically shown in figure 4. In this coupled state as schematically shown in figure 4, the protruding member 42 is accessible from the outside of the coupled duct sections 20", 21" and can be pushed inwards in order to move the protruding member 42 substantially out of the receiving opening 432 so that the female end portion can move over the male end portion in order to disconnect the duct sections 20", 21".

In the example schematically shown in figure 4, the protruding member 42 is substantially cylindrical and is provided with a rounded top 47 at a side facing away from the distal end 49 of the coil spring 43. In the example of figure 4, the distal end 49 is provided with a closing member 49' is configured to substantially close off the opening 431 of the male end portion of the duct section 20", when the duct section 20" is connected to one of the one or more other duct sections 21".

Figure 5 shows a third example of a male end portion the duct section 20‴ arranged inside a female end portion of the adjacent duct section 21‴. In this example, the duct sections 20‴, 21‴ are double walled concentric duct sections with an outer wall 511 and an inner wall 56. A spacer 55 is arranged between the inner wall 56 and the outer wall 511, to ensure stability and concentricity of the duct sections 20‴, 21‴. It is noted that the female end portion of the adjacent duct section 21‴ does not comprise the inner wall and the spacers.

Again, both the outer wall 511 of the male end portion and the outer wall 512 of the female end portion are provided with a through hole; in particular with the opening 531 and the receiving opening 532 respectively, which are configure to align with each other when the male end portion is arranged in the female end portion. The male end portion of the duct section 20" is provided with a resilient member, in particular a folded leaf spring 54, which is clamped between the inner wall 56 and the outer wall 511; the folded leaf spring 54 does not need to be fixed to a part of the male end portion of the duct section 20‴. Said folded leaf spring 54 comprises a proximal end 57 which is arranged to abut against an outer surface of the inner wall 56, and a distal end 58 which is arranged to abut against an inner surface of the outer wall 511. The distal end 58 of the folded leaf spring 54 comprises a protruding member 52, which is configured so that the protruding member 52 passes through the opening 531 and the receiving opening 532 when the male end portion is arranged in the female end portion and the opening 531 and the receiving opening 532 align with each other. In particular, the folded leaf spring 54 is configured to push the protruding member 52 in a radial direction outwards. The folded leaf spring 54 allows to push the protruding member 52 inwards, in particular against the outward pushing spring force of the folded leaf spring 54, in order to allow to move outer wall 512 of the female end portion over the outer wall 511 of the male end portion until the receiving opening 532 comes in line with the opening 531 of the male end portion and the protrusion 52 is pushed radially outward to pass through the receiving opening 532 in order to establish a fixed coupling between the male end portion of the duct section 20‴ inside the female end portion of the adjacent duct section 21‴, as schematically shown in figure 5. In this coupled state as schematically shown in figure 5, the protruding member 52 is accessible from the outside of the coupled duct sections 20‴, 21‴ and can be pushed inwards in order to move the protruding member 52 substantially out of the receiving opening 532 so that the female end portion can move over the male end portion in order to disconnect the duct sections 20‴, 21‴.

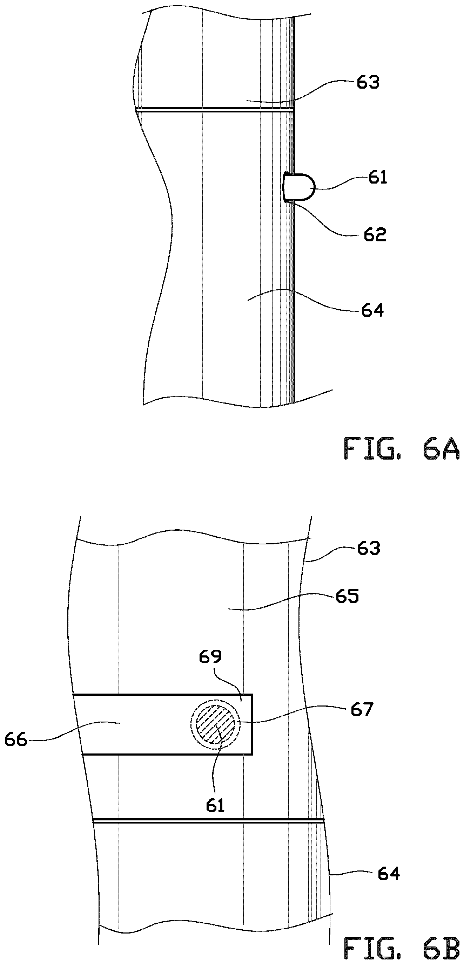

Figure 6A, shows a detailed view of an example of an interconnect between a duct section 63 and an adjacent duct section 64 in a coupled state. A protruding member 61 that is attached to a resilient member on the inside of a male end portion of the duct section 64 can be seen passing through a receiving opening 62 of a female end portion of the adjacent duct section 64. Figure 6a further shows the substantially smooth and continuous outer surface of the duct system, that can be realized due to minimal number of components that protrude from the outer surface of the duct section, in particular in the interconnecting region.

It is noted that it is not necessary that the resilient member and/or the protruding member closes off the opening in the circumferential wall of the male end portion, in particular when the duct system is configured for delivering and/or removing ambient air, for example. However for removing flue gasses or other gasses with unhealthy substances, it is desirable that the resilient member and/or the protruding member is configured to at least close off the opening in the circumferential wall of the male end portion, and preferably that the resilient member and/or the protruding member comprises a sealing member to provide a substantial gas-tight closure of the opening in the circumferential wall of the male end portion.

Figure 6B, shows a detailed view of an inner surface of the interconnected duct sections 63, 64 of figure 6A. In this example the resilient member is a leaf spring 66 which comprises a cylindrical protruding member 61 at a distal end 69 of the leaf spring 66, which protruding member 61 passes through the opening 67 in the circumferential wall of the male end portion of the duct section 63. The size of the distal end 69 of the leaf spring 66 is configured so that this distal end 69 covers the opening 67 in the circumferential wall of the male end portion, at least when the distal end 69 abuts against the inner surface 65 of the outer wall of the male end portion.

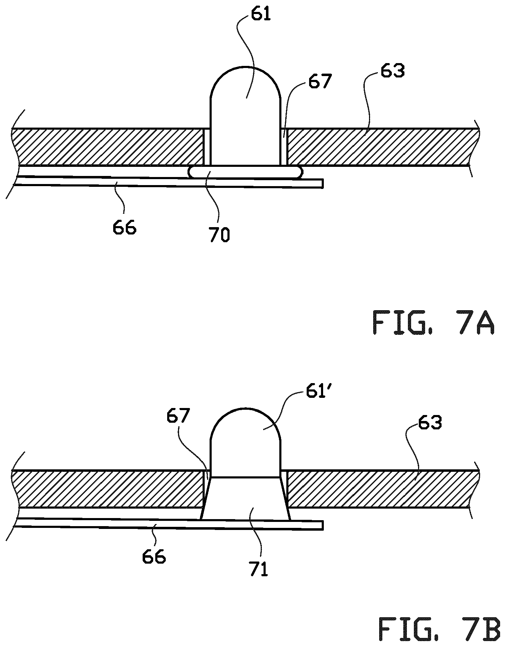

It is noted that by configuring the leaf spring 66 such that it pushes the distal end 69 with an appropriate force against the inner wall 65 of the male end portion, a substantial gas-tight closure of the opening 67 can be provided. In case an improved gas-tight closure of the opening 67 is necessary, the leaf spring 66 and/or the protruding member 61 can be provided with a sealing member. For example, the leaf spring 66 can be provided with a sealing ring 70, for example an O-ring, arranged around the protruding member 61, which sealing ring 70 is pushed against the inner wall 65 around the opening 67 and thereby seals the opening 67, as schematically shown in figure 7A. In addition or alternatively, the protruding member 61' can be provided with a conical part 71 that wedges in the opening 67 and thereby seals the opening 67, as schematically shown in figure 7B.

In summary, the invention relates to a duct section configured for connecting to one or more other duct sections for creating a duct system for delivering and/or removing gaseous substances. The duct section comprises a circumferential outer wall with an inner surface and an outer surface, wherein the duct section comprises a first end with a male end portion configured to fit in a female end portion of one of the one or more other duct sections. The said female end portion comprises a receiving opening in a circumferential wall of the female end portion. The male end portion comprises an opening in a circumferential wall of the male end portion, wherein said opening is spaced a first distance apart from the first end. The male end portion comprises a protruding member that is arranged to pass through the opening in the male end portion projecting outwards with respect to the outer surface of the outer wall and, when interconnected with said one of the one or more other duct sections, passes through the receiving opening of the female end portion, and wherein said protruding member is supported by a resilient member which is arranged inside the duct section. The duct section comprises a circumferential inner wall that is enclosed by the circumferential outer wall to form a double wall duct section or a double wall concentric duct section.

It is to be understood that the above description is included to illustrate the operation of the preferred embodiments and is not meant to limit the scope of the invention. From the above discussion, many variations will be apparent to one skilled in the art that would yet be encompassed by the scope of the present invention, which is defined by the appended claims.

## Claims

1. A duct section (20, 20", 20‴, 21, 21‴, 22, 63, 64) configured for connecting to one or more other duct sections (20, 20", 20‴, 21, 21‴, 22, 63, 64) for creating a duct system for delivering and/or removing gaseous substances, wherein the duct section (20, 20", 20‴, 21, 21‴, 22, 63, 64) comprises a circumferential outer wall (23, 411, 412, 511, 512) with an inner surface (65) and an outer surface,
wherein the duct section (20, 20", 20‴, 21, 21‴, 22, 63, 64) is a double wall duct section or a double wall concentric duct section, comprising a circumferential inner wall (24, 45, 56, 65) that is enclosed by and spaced apart from the circumferential outer wall (23, 411, 412, 511, 512),
wherein the duct section (20, 20", 20‴, 21, 21', 21‴, 22, 63, 64) comprises a first end (25') with a male end portion (25) configured to fit in a female end portion (26) of one of the one or more other duct sections (20, 20", 20‴, 21, 21‴, 22, 63, 64),
**characterized in that** the male end portion (25) comprises an opening (29, 67, 341, 531) in a circumferential wall (23) of the male end portion (25),
wherein said opening (29, 67, 531) is spaced a first distance (d1) apart from the first end (25'),
wherein the male end portion (25) comprises a protruding member (27, 27', 27", 42, 52, 61, 61') that is arranged to pass through the opening (29, 67, 531) in the male end portion (25) projecting outwards with respect to the outer surface of the outer wall (23, 411, 412, 511, 512) and, when interconnected with said one of the one or more other duct sections (20, 20", 20‴, 21, 21', 21‴, 22, 63, 64), passes through a receiving opening (28, 28', 28", 532, 62) in a circumferential wall of the female end portion (26),
wherein said protruding member (27, 27', 27'', 42, 52, 61, 61') is supported by a resilient member (44, 54, 66) which is arranged inside the duct section (20, 20", 20‴, 21, 21‴, 22, 63, 64).

2. The duct section according to claim 1, wherein the resilient member (44, 54, 66) comprises a first end (49, 58) and a second end (48, 57), wherein the protruding member (27, 27', 27", 42, 52, 61, 61') is attached to the first end (49, 58), wherein the circumferential inner wall (24, 45, 56, 65) comprises an outer surface which is facing the inner surface (65) of the outer wall (23, 411, 412, 511, 512), wherein the second end (48, 57) of the resilient member (44, 54, 66) is:
- connected to the inner surface of the outer wall (23, 411, 412, 511, 512), preferably wherein the second end (48, 57) of the resilient member (44, 54, 66) is fixed to the inner surface of the outer wall (23, 411, 412, 511, 512), or
- connected to the outer surface of the inner wall (24, 45, 56, 65), or
- clamped between the inner surface of the outer wall (23, 411, 412, 511, 512) and the outer surface of the inner wall (24, 45, 56, 65).

3. The duct section according to any of the previous claims, wherein the resilient member (44, 54, 66) and/or the protruding member (27, 27', 27", 42, 52, 61, 61') is configured to substantially close off the opening (29, 67, 531) of the male end portion (25) of the duct section (20, 20", 20‴, 21, 21‴, 22, 63, 64) when the duct section (20, 20", 20‴, 21, 21‴, 22, 63, 64) is connected to one of the one or more other duct sections (20, 20", 20‴, 21, 21‴, 22, 63, 64), preferably wherein the resilient member (44, 54, 66) and/or the protruding member (27, 27', 27", 42, 52, 61, 61') comprises a sealing member (70), preferably wherein the sealing member comprises a rubber or a rubber-like sealing ring (70) which is arranged around the protruding member (27, 27', 27", 42, 52, 61, 61').

4. The duct section according to any of the previous claims, wherein the resilient member (33, 44, 54, 66) is oriented along an axial direction or a circumferential direction of the male end portion (25) of the duct section (20, 20", 20‴, 21, 21‴, 22, 63, 64).

5. The duct section according to any of the previous claims, wherein the resilient member (44, 54, 66) comprises a leaf spring (54, 66), a coil spring (44) or a volute spring, preferentially wherein the leaf spring (54, 66), the coil spring (44) or the volute spring are made of metal.

6. The duct section according to any of the previous claims, where the protruding member (27, 27', 27", 42, 52, 61, 61') is cylindrical or substantially cylindrical in shape, and/or wherein the protruding member (27, 27', 27" , 42, 52, 61, 61') comprises a beveled edge at a side facing away from the resilient member ( 44, 54, 66) .

7. The duct section according to any of the previous claims, an outer diameter of the male end portion (25) is smaller than an outer diameter of the rest of the duct section (20, 20", 20‴, 21, 21‴, 22, 63, 64) by approximately twice a wall thickness of the circumferential outer wall (23, 411, 412, 511, 512) .

8. The duct section according to any of the previous claims, wherein the male end portion (25) of the duct section (20, 20", 20‴, 21, 21‴, 22, 63, 64) is configured to extend over a distance (d3) in a range between 40 - 70 mm, preferably the male end portion (25) of the duct section (20, 20", 20‴, 21, 21‴, 22, 63, 64) extends over a distance (d3) of approximately 50 mm, and is preferably configured to insert the male end portion (25) in said female end portion (26) of one of the one or more other duct sections (20, 20", 20‴, 21, 21‴, 22, 63, 64), over said distance (d3).

9. The duct section according to any of the previous claims, wherein the first distance (d1) from the first end of the male end portion (25) is approximately half the length (d3) of the male end portion (25).

10. The duct section according to any of the previous claims, further comprising a second end (26') with a female end portion (26) formed to fit around a male end portion (25) of an other duct section (20, 20", 20‴, 21, 21‴, 22, 63, 64) according to claim 1,
wherein the female end portion (26) comprises a receiving opening (28, 28', 28", 532, 62) spaced a second distance (d2) from the second end (26'), and
wherein the receiving opening (28, 28', 28", 532, 62) is configured such that the protruding member (27, 27', 27", 42, 52, 61, 61') of the other duct section (20, 20", 20‴, 21, 21‴, 22, 63, 64) with the male end portion (25) passes through the receiving opening (28, 28', 28", 532, 62) of the female end portion (26) of the duct section (20, 20", 20‴, 21, 21‴, 22, 63, 64), when the female end portion (26) of the duct section (20, 20", 20‴, 21, 21‴, 22, 63, 64) is connected to the male end portion (25) of the other duct section (20, 20", 20‴, 21, 21‴, 22, 63, 64).

11. A duct section (20, 20", 20‴, 21, 21‴, 22, 63, 64) configured for connecting to one or more other duct sections (20, 20", 20‴, 21, 21‴, 22, 63, 64) for creating a duct system for delivering and/or removing gaseous substances,
wherein the duct section (20, 20", 20‴, 21, 21‴, 22, 63, 64) comprises a circumferential outer wall (23, 411, 412, 511, 512) with an inner surface and an outer surface,
wherein the duct section (20, 20", 20‴, 21, 21‴, 22, 63, 64) is a double wall duct section or a double wall concentric duct section, comprising a circumferential inner wall (24, 45, 56, 65) that is enclosed by and spaced apart from the circumferential outer wall (23, 411, 412, 511, 512),
wherein the duct section (20, 20", 20‴, 21, 21‴, 22, 63, 64) comprises a second end (26') with a female end portion (26) formed to fit around a male end portion (25) of an other duct section (20, 20", 20‴, 21, 21‴, 22, 63, 64) according to claim 1,
wherein the female end portion (26) of the duct section (20, 20", 20‴, 21, 21‴, 22, 63, 64) comprises a receiving opening (28, 28', 28", 532, 62) in a circumferential wall spaced a second distance (d2) from the second end, and
wherein the receiving opening (28, 28', 28", 532, 62) is configured such that the protruding member (27, 27', 27", 42, 52, 61, 61') of the other duct section (20, 20", 20‴, 21, 21‴, 22, 63, 64) with the male end portion (25) passes through the receiving opening (28, 28', 28", 532, 62) of the female end portion (26) of the duct section (20, 20", 20‴, 21, 21‴, 22, 63, 64), when the female end portion (26) of the duct section (20, 20", 20‴, 21, 21‴, 22, 63, 64) is connected to the male end portion (25) of the other duct section (20, 20", 20‴, 21, 21‴, 22, 63, 64).

12. The duct section according to claim 10 or 11, wherein the female end portion (26) has an outer diameter that is substantially equal to an outer diameter of the circumferential outer wall (23, 411, 412, 511, 512) of the duct section (20, 20", 20‴, 21, 21‴, 22, 63, 64).

13. The duct section according to any of the previous claims, wherein the duct section (20, 20", 20‴, 21, 21‴, 22, 63, 64) is configured to provide a duct system part comprising at least two interconnected duct sections, wherein said duct system part comprises a substantially constant outer diameter, in particular a substantially continuous and smooth outer surface.

14. A method for manufacturing a duct section (20, 20", 20‴, 21, 21‴, 22, 63, 64), wherein the method comprises the steps of:
- providing a duct section (20, 20", 20‴, 21, 21‴, 22, 63, 64) which comprises a circumferential outer wall (23, 411, 412, 511, 512) with an inner surface (65) and an outer surface, wherein the duct section (20, 20", 20‴, 21, 21‴, 22, 63, 64) comprises a first end (25') with a male end portion (25) formed to fit in a female end portion (26) of one of one or more other duct sections (20, 20", 20‴, 21, 21‴, 22, 63, 64), wherein the male end portion (25) comprises an opening (29, 67, 531) spaced a first distance (d1) from the first end (25'), wherein the duct section (20, 20", 20‴, 21, 21‴, 22, 63, 64) is a double wall duct section or a double wall concentric duct section, comprising a circumferential inner wall (24, 45, 56, 65) that is enclosed by and spaced apart from the circumferential outer wall (23, 411, 412, 511, 512);
- providing a protruding member (27, 27', 27", 42, 52, 61, 61') which is supported on a resilient member (44, 54, 66); and
- arranging the protruding member (27, 27', 27", 42, 52, 61, 61') to pass through the opening (29, 67, 531) with the resilient member (44, 54, 66) at the inside of the male end portion (25) of the duct section (20, 20", 20‴, 21, 21‴, 22, 63, 64).

15. A method for manufacturing a duct system by interconnecting individual duct sections (20, 20", 20‴, 21, 21‴, 22, 63, 64) together by placing the male end portion (25) of at least one duct section (20, 20", 20‴, 21, 21‴, 22, 63, 64) according to any one of the claims 1 - 9, inside the female end portion (26) of at least one other duct section (20, 20", 20‴, 21, 21‴, 22, 63, 64) according to any one of the claims 10 - 12, wherein the method comprises the step of:
- positioning the receiving opening (28, 28', 28", 532, 62) of the female end portion (26) such that the protruding member (27, 27', 27", 42, 52, 61, 61') of the male end portion (25) passes through the receiving opening (28, 28', 28", 532, 62) of the female end portion (26).

## Patentansprüche

1. Kanalabschnitt (20, 20", 20‴, 21, 21‴, 22, 63, 64), der zum Verbinden mit einem oder mehreren anderen Kanalabschnitten (20, 20", 20‴, 21, 21‴, 22, 63, 64) zum Herstellen eines Kanalsystems zum Zuführen und/oder Abführen von gasförmigen Stoffen gestaltet ist, wobei der Kanalabschnitt (20, 20", 20‴, 21, 21‴, 22, 63, 64) eine Umfangsaußenwand (23, 411, 412, 511, 512) mit einer Innenfläche (65) und einer Außenfläche umfasst,
wobei der Kanalabschnitt (20, 20", 20‴, 21, 21‴, 22, 63, 64) ein doppelwandiger Kanalabschnitt oder ein doppelwandiger konzentrischer Kanalabschnitt ist, der eine Umfangsinnenwand (24, 45, 56, 65) umfasst, die von der Umfangsaußenwand (23, 411, 412, 511, 512) umschlossen wird und von ihr beabstandet ist,
wobei der Kanalabschnitt (20, 20", 20‴, 21, 21‴, 22, 63, 64) ein erstes Ende (25') mit einem Einsteckendabschnitt (25) umfasst, der derart gestaltet ist, dass er in einen aufnehmenden Endabschnitt (26) von einem des einen oder der mehreren anderen Kanalabschnitte (20, 20", 20‴, 21, 21‴, 22, 63, 64) passt,
**dadurch gekennzeichnet, dass** der Einsteckendabschnitt (25) eine Öffnung (29, 67, 531) in einer Umfangswand (23) des Einsteckendabschnitts (25) umfasst,
wobei die Öffnung (29, 67, 531) um einen ersten Abstand (d1) von dem ersten Ende (25') beabstandet ist,
wobei der Einsteckendabschnitt (25) ein vorstehendes Element (27, 27', 27", 42, 52, 61, 61') umfasst, das derart angeordnet ist, dass es nach außen vorstehend bezogen auf die Außenfläche der Außenwand (23, 411, 412, 511, 512) durch die Öffnung (29, 67, 531) in dem Einsteckendabschnitt (25) verläuft und, wenn verbunden mit einem des einen oder der mehreren anderen Kanalabschnitte (20, 20", 20‴, 21, 21‴, 22, 63, 64), durch eine Aufnahmeöffnung (28, 28', 28", 532, 62) in einer Umfangswand des aufnehmenden Endabschnitts (26) verläuft,
wobei das vorstehende Element (27, 27', 27", 42, 52, 61, 61') von einem nachgiebigen Element (44, 54, 66) getragen wird, das innerhalb des Kanalabschnitts (20, 20", 20‴, 21, 21‴, 22, 63, 64) angeordnet ist.

2. Kanalabschnitt nach Anspruch 1, wobei das nachgiebige Element (44, 54, 66) ein erstes Ende (49, 58) und ein zweites Ende (48, 57) umfasst, wobei das vorstehende Element (27, 27', 27", 42, 52, 61, 61') an dem ersten Ende (49, 58) angebracht ist, wobei die Umfangsinnenwand (24, 45, 56, 65) eine Außenfläche umfasst, die der Innenfläche (65) der Außenwand (23, 411, 412, 511, 512) zugewandt ist, wobei das zweite Ende (48, 57) des nachgiebigen Elements (44, 54, 66)
- mit der Innenfläche der Außenwand (23, 411, 412, 511, 512) verbunden ist, vorzugsweise wobei das zweite Ende (48, 57) des nachgiebigen Elements (44, 54, 66) an der Innenfläche der Außenwand (23, 411, 412, 511, 512) befestigt ist, oder
- mit der Außenfläche der Innenwand (24, 45, 56, 65) verbunden ist, oder
- zwischen der Innenfläche der Außenwand (23, 411, 412, 511, 512) und der Außenfläche der Innenwand (24, 45, 56, 65) eingespannt ist.

3. Kanalabschnitt nach einem der vorhergehenden Ansprüche, wobei das nachgiebige Element (44, 54, 66) und/oder das vorstehende Element (27, 27', 27", 42, 52, 61, 61') derart gestaltet sind/ist, dass sie/es die Öffnung (29, 67, 531) des Einsteckendabschnitts (25) des Kanalabschnitts (20, 20", 20‴, 21, 21‴, 22, 63, 64) im Wesentlichen absperren/absperrt, wenn der Kanalabschnitt (20, 20", 20‴, 21, 21‴, 22, 63, 64) mit einem des einen oder der mehreren anderen Kanalabschnitte (20, 20", 20‴, 21, 21‴, 22, 63, 64) verbunden ist, vorzugsweise wobei das nachgiebige Element (44, 54, 66) und/oder das vorstehende Element (27, 27', 27", 42, 52, 61, 61') ein Dichtelement (70) umfassen/umfasst, vorzugsweise wobei das Dichtelement einen Gummi- oder einen gummiartigen Dichtring (70) umfasst, der um das vorstehende Element (27, 27', 27", 42, 52, 61, 61') angeordnet ist.

4. Kanalabschnitt nach einem der vorhergehenden Ansprüche, wobei das nachgiebige Element (44, 54, 66) entlang einer axialen Richtung oder einer Umfangsrichtung des Einsteckendabschnitts (25) des Kanalabschnitts (20, 20", 20‴, 21, 21‴, 22, 63, 64) ausgerichtet ist.

5. Kanalabschnitt nach einem der vorhergehenden Ansprüche, wobei das nachgiebige Element (44, 54, 66) eine Blattfeder (54, 66), eine Schraubenfeder (44) oder eine Evolutfeder umfasst, vorzugsweise wobei die Blattfeder (54, 66), die Schraubenfeder (44) oder die Evolutfeder aus Metall besteht.

6. Kanalabschnitt nach einem der vorhergehenden Ansprüche, wobei das vorstehende Element (27, 27', 27", 42, 52, 61, 61') eine zylindrische oder im Wesentlichen zylindrische Form aufweist und/oder wobei das vorstehende Element (27, 27', 27", 42, 52, 61, 61') eine abgeschrägte Kante an einer von dem nachgiebigen Element (44, 54, 66) abgewandten Seite umfasst.

7. Kanalabschnitt nach einem der vorhergehenden Ansprüche, wobei ein Außendurchmesser des Einsteckendabschnitts (25) um ungefähr das Doppelte einer Wanddicke der Umfangsaußenwand (23, 411, 412, 511, 512) kleiner als ein Außendurchmesser des übrigen Kanalabschnitts (20, 20", 20‴, 21, 21‴, 22, 63, 64) ist.

8. Kanalabschnitt nach einem der vorhergehenden Ansprüche, wobei der Einsteckendabschnitt (25) des Kanalabschnitts (20, 20", 20‴, 21, 21‴, 22, 63, 64) derart gestaltet ist, dass er sich über eine Strecke (d3) in einem Bereich zwischen 40 und 70 mm erstreckt, vorzugsweise wobei sich der Einsteckendabschnitt (25) des Kanalabschnitts (20, 20", 20‴, 21, 21‴, 22, 63, 64) über eine Strecke (d3) von ungefähr 50 mm erstreckt, und vorzugsweise zum Einführen des Einsteckendabschnitts (25) in den aufnehmenden Endabschnitt (26) von einem des einen oder der mehreren anderen Kanalabschnitte (20, 20", 20‴, 21, 21‴, 22, 63, 64) über diese Strecke (d3) gestaltet ist.

9. Kanalabschnitt nach einem der vorhergehenden Ansprüche, wobei der erste Abstand (d1) von dem ersten Ende des Einsteckendabschnitts (25) ungefähr die halbe Länge (d3) des Einsteckendabschnitts (25) hat.

10. Kanalabschnitt nach einem der vorhergehenden Ansprüche, ferner umfassend ein zweites Ende (26') mit einem aufnehmenden Endabschnitt (26), der derart ausgebildet ist, dass er um einen Einsteckendabschnitt (25) eines anderen Kanalabschnitts (20, 20", 20‴, 21, 21‴, 22, 63, 64) nach Anspruch 1 passt,
wobei der aufnehmende Endabschnitt (26) eine Aufnahmeöffnung (28, 28', 28", 532, 62) umfasst, die um einen zweiten Abstand (d2) von dem zweiten Ende (26') beabstandet ist, und
wobei die Aufnahmeöffnung (28, 28', 28", 532, 62) derart gestaltet ist, dass das vorstehende Element (27, 27', 27", 42, 52, 61, 61') des anderen Kanalabschnitts (20, 20", 20‴, 21, 21‴, 22, 63, 64) mit dem Einsteckendabschnitt (25) durch die Aufnahmeöffnung (28, 28', 28", 532, 62) des aufnehmenden Endabschnitts (26) des Kanalabschnitts (20, 20", 20‴, 21, 21‴, 22, 63, 64) verläuft, wenn der aufnehmende Endabschnitt (26) des Kanalabschnitts (20, 20", 20‴, 21, 21‴, 22, 63, 64) mit dem Einsteckendabschnitt (25) des anderen Kanalabschnitts (20, 20", 20‴, 21, 21‴, 22, 63, 64) verbunden ist.

11. Kanalabschnitt (20, 20", 20‴, 21, 21‴, 22, 63, 64), der zum Verbinden mit einem oder mehreren anderen Kanalabschnitten (20, 20", 20‴, 21, 21‴, 22, 63, 64) zum Herstellen eines Kanalsystems zum Zuführen und/oder Abführen von gasförmigen Stoffen gestaltet ist,
wobei der Kanalabschnitt (20, 20", 20‴, 21, 21‴, 22, 63, 64) eine Umfangsaußenwand (23, 411, 412, 511, 512) mit einer Innenfläche und einer Außenfläche umfasst,
wobei der Kanalabschnitt (20, 20", 20‴, 21, 21‴, 22, 63, 64) ein doppelwandiger Kanalabschnitt oder ein doppelwandiger konzentrischer Kanalabschnitt ist, der eine Umfangsinnenwand (24, 45, 56, 65) umfasst, die von der Umfangsaußenwand (23, 411, 412, 511, 512) umschlossen wird und von ihr beabstandet ist,
wobei der Kanalabschnitt (20, 20", 20‴, 21, 21‴, 22, 63, 64) ein zweites Ende (26') mit einem aufnehmenden Endabschnitt (26) umfasst, der derart ausgebildet ist, dass er um einen Einsteckendabschnitt (25) eines anderen Kanalabschnitts (20, 20", 20‴, 21, 21‴, 22, 63, 64) nach Anspruch 1 passt,
wobei der aufnehmende Endabschnitt (26) des Kanalabschnitts (20, 20", 20‴, 21, 21‴, 22, 63, 64) eine Aufnahmeöffnung (28, 28', 28", 532, 62) in einer Umfangswand umfasst, die um einen zweiten Abstand (d2) von dem zweiten Ende beabstandet ist, und
wobei die Aufnahmeöffnung (28, 28', 28", 532, 62) derart gestaltet ist, dass das vorstehende Element (27, 27', 27", 42, 52, 61, 61') des anderen Kanalabschnitts (20, 20", 20‴, 21, 21‴, 22, 63, 64) mit dem Einsteckendabschnitt (25) durch die Aufnahmeöffnung (28, 28', 28", 532, 62) des aufnehmenden Endabschnitts (26) des Kanalabschnitts (20, 20", 20‴, 21, 21‴, 22, 63, 64) verläuft, wenn der aufnehmende Endabschnitt (26) des Kanalabschnitts (20, 20", 20‴, 21, 21‴, 22, 63, 64) mit dem Einsteckendabschnitt (25) des anderen Kanalabschnitts (20, 20", 20‴, 21, 21‴, 22, 63, 64) verbunden ist.

12. Kanalabschnitt nach Anspruch 10 oder 11, wobei der aufnehmende Endabschnitt (26) einen Außendurchmesser aufweist, der im Wesentlichen gleich einem Außendurchmesser der Umfangsaußenwand (23, 411, 412, 511, 512) des Kanalabschnitts (20, 20", 20‴, 21, 21‴, 22, 63, 64) ist.

13. Kanalabschnitt nach einem der vorhergehenden Ansprüche, wobei der Kanalabschnitt (20, 20", 20‴, 21, 21‴, 22, 63, 64) zum Bereitstellen eines Kanalsystemteils gestaltet ist, der mindestens zwei miteinander verbundene Kanalabschnitte umfasst, wobei der Kanalsystemteil einen im Wesentlichen konstanten Außendurchmesser, insbesondere eine im Wesentlichen ununterbrochene und glatte Außenfläche, umfasst.

14. Verfahren zur Herstellung eines Kanalabschnitts (20, 20", 20‴, 21, 21‴, 22, 63, 64), wobei das Verfahren die folgenden Schritte umfasst:
- Bereitstellen eines Kanalabschnitts (20, 20", 20‴, 21, 21‴, 22, 63, 64), der eine Umfangsaußenwand (23, 411, 412, 511, 512) mit einer Innenfläche (65) und einer Außenfläche umfasst, wobei der Kanalabschnitt (20, 20", 20‴, 21, 21‴, 22, 63, 64) ein erstes Ende (25') mit einem Einsteckendabschnitt (25) umfasst, der derart ausgebildet ist, dass er in einen aufnehmenden Endabschnitt (26) von einem von einem oder mehreren anderen Kanalabschnitten (20, 20", 20‴, 21, 21‴, 22, 63, 64) passt, wobei der Einsteckendabschnitt (25) eine Öffnung (29, 67, 531) umfasst, die um einen ersten Abstand (d1) von dem ersten Ende (25') beabstandet ist, wobei der Kanalabschnitt (20, 20", 20‴, 21, 21‴, 22, 63, 64) ein doppelwandiger Kanalabschnitt oder ein doppelwandiger konzentrischer Kanalabschnitt ist, der eine Umfangsinnenwand (24, 45, 56, 65) umfasst, die von der Umfangsaußenwand (23, 411, 412, 511, 512) umschlossen wird und von ihr beabstandet ist;
- Bereitstellen eines vorstehenden Elements (27, 27', 27", 42, 52, 61, 61'), das auf einem nachgiebigen Element (44, 54, 66) getragen wird; und
- Anordnen des vorstehenden Elements (27, 27', 27", 42, 52, 61, 61') derart, dass es durch die Öffnung (29, 67, 531) verläuft, wobei sich das nachgiebige Element (44, 54, 66) auf der Innenseite des Einsteckendabschnitts (25) des Kanalabschnitts (20, 20", 20‴, 21, 21‴, 22, 63, 64) befindet.

15. Verfahren zur Herstellung eines Kanalsystems durch Verbinden einzelner Kanalabschnitte (20, 20", 20‴, 21, 21‴, 22, 63, 64) miteinander durch Platzieren des Einsteckendabschnitts (25) von mindestens einem Kanalabschnitt (20, 20", 20‴, 21, 21‴, 22, 63, 64) nach einem der vorhergehenden Ansprüche 1 bis 9 in dem aufnehmenden Endabschnitt (26) von mindestens einem anderen Kanalabschnitt (20, 20", 20‴, 21, 21‴, 22, 63, 64) nach einem der vorhergehenden Ansprüche 10 bis 12, wobei das Verfahren den folgenden Schritt umfasst:
- Positionieren der Aufnahmeöffnung (28, 28', 28", 532, 62) des aufnehmenden Endabschnitts (26) derart, dass das vorstehende Element (27, 27', 27", 42, 52, 61, 61') des Einsteckendabschnitts (25) durch die Aufnahmeöffnung (28, 28', 28", 532, 62) des aufnehmenden Endabschnitts (26) verläuft.

## Revendications

1. Section de conduit (20, 20", 20‴, 21, 21‴, 22, 63, 64) configurée pour être raccordée à une ou plusieurs autres sections de conduit (20, 20", 20‴, 21, 21‴, 22, 63, 64) pour créer un système de conduit pour distribuer et/ou éliminer des substances gazeuses, dans laquelle la section de conduit (20, 20", 20‴, 21, 21‴, 22, 63, 64) comprend une paroi externe circonférentielle (23, 411, 412, 511, 512) avec une surface interne (65) et une surface externe,
dans laquelle la section de conduit (20, 20", 20‴, 21, 21‴, 22, 63, 64) est une section de conduit à double paroi ou une section de conduit concentrique à double paroi, comprenant une paroi interne circonférentielle (24, 45, 56, 65) qui est entourée par et espacée de la paroi externe circonférentielle (23, 411, 412, 511, 512),
dans laquelle la section de conduit (20, 20", 20‴, 21, 21‴, 22, 63, 64) comprend une première extrémité (25') avec une portion d'extrémité mâle (25) configurée pour rentrer dans une portion d'extrémité femelle (26) de l'une des une ou plusieurs autres sections de conduit (20, 20", 20‴, 21, 21‴, 22, 63, 64),
**caractérisée en ce que** la portion d'extrémité mâle (25) comprend une ouverture (29, 67, 531) dans une paroi circonférentielle (23) de la portion d'extrémité mâle (25),
dans laquelle ladite ouverture (29, 67, 531) est espacée d'une première distance (d1) de la première extrémité (25'),
dans laquelle la portion d'extrémité mâle (25) comprend un élément saillant (27, 27', 27", 42, 52, 61, 61') qui est agencé pour passer à travers l'ouverture (29, 67, 531) dans la portion d'extrémité mâle (25) faisant saillie vers l'extérieur par rapport à la surface externe de la paroi externe (23, 411, 412, 511, 512) et, lorsqu'elle est reliée à ladite autre section de conduit des une ou plusieurs autres sections de conduit (20, 20", 20‴, 21, 21‴, 22, 63, 64), passe à travers une ouverture de réception (28, 28', 28", 532, 62) dans une paroi circonférentielle de la portion d'extrémité femelle (26),
dans laquelle ledit élément saillant (27, 27', 27", 42, 52, 61, 61') est supporté par un élément élastique (44, 54, 66) qui est agencé à l'intérieur de la section de conduit (20, 20", 20‴, 21, 21‴, 22, 63, 64).

2. Section de conduit selon la revendication 1, dans laquelle l'élément élastique (44, 54, 66) comprend une première extrémité (49, 58) et une seconde extrémité (48, 57), dans laquelle l'élément saillant (27, 27', 27", 42, 52, 61, 61') est fixé à la première extrémité (49, 58), dans laquelle la paroi interne circonférentielle (24, 45, 56, 65) comprend une surface externe qui fait face à la surface interne (65) de la paroi externe (23, 411, 412, 511, 512), dans laquelle la seconde extrémité (48, 57) de l'élément élastique (44, 54, 66) est :
- raccordée à la surface interne de la paroi externe (23, 411, 412, 511, 512), de préférence dans laquelle la seconde extrémité (48, 57) de l'élément élastique (44, 54, 66) est fixée à la surface interne de la paroi externe (23, 411, 412, 511, 512), ou
- raccordée à la surface externe de la paroi interne (24, 45, 56, 65), ou
- serrée entre la surface interne de la paroi externe (23, 411, 412, 511, 512) et la surface externe de la paroi interne (24, 45, 56, 65).

3. Section de conduit selon l'une quelconque des revendications précédentes, dans laquelle l'élément élastique (44, 54, 66) et/ou l'élément saillant (27, 27', 27", 42, 52, 61, 61') sont configurés pour sensiblement refermer l'ouverture (29, 67, 531) de la portion d'extrémité mâle (25) de la section de conduit (20, 20", 20‴, 21, 21‴, 22, 63, 64) lorsque la section de conduit (20, 20", 20‴, 21, 21‴, 22, 63, 64) est raccordée à l'une des une ou plusieurs autres sections de conduit (20, 20", 20‴, 21, 21‴, 22, 63, 64), de préférence dans laquelle l'élément élastique (44, 54, 66) et/ou l'élément saillant (27, 27', 27", 42, 52, 61, 61') comprennent un élément d'étanchéité (70), de préférence dans laquelle l'élément d'étanchéité comprend une bague d'étanchéité en caoutchouc ou de type caoutchouc (70) qui est agencée autour de l'élément saillant (27, 27', 27", 42, 52, 61, 61').

4. Section de conduit selon l'une quelconque des revendications précédentes, dans laquelle l'élément élastique (44, 54, 66) est orienté le long d'une direction axiale ou d'une direction circonférentielle de la portion d'extrémité mâle (25) de la section de conduit (20, 20", 20‴, 21, 21‴, 22, 63, 64) .

5. Section de conduit selon l'une quelconque des revendications précédentes, dans laquelle l'élément élastique (44, 54, 66) comprend un ressort à lames (54, 66), un ressort hélicoïdal (44) ou un ressort en volute, de préférence dans laquelle le ressort à lames (54, 66), le ressort hélicoïdal (44) ou le ressort en volute sont en métal.

6. Section de conduit selon l'une quelconque des revendications précédentes, dans laquelle l'élément saillant (27, 27', 27", 42, 52, 61, 61') est de forme cylindrique ou sensiblement cylindrique, et/ou dans laquelle l'élément saillant (27, 27', 27", 42, 52, 61, 61') comprend un bord biseauté d'un côté opposé à l'élément élastique (44, 54, 66).

7. Section de conduit selon l'une quelconque des revendications précédentes, un diamètre extérieur de la portion d'extrémité mâle (25) est plus petit qu'un diamètre extérieur du reste de la section de conduit (20, 20", 20‴, 21, 21‴, 22, 63, 64) d'environ deux fois une épaisseur de paroi de la paroi externe circonférentielle (23, 411, 412, 511, 512).

8. Section de conduit selon l'une quelconque des revendications précédentes, dans laquelle la portion d'extrémité mâle (25) de la section de conduit (20, 20", 20‴, 21, 21‴, 22, 63, 64) est configurée pour s'étendre sur une distance (d3) dans une plage comprise entre 40-70 mm, de préférence la portion d'extrémité mâle (25) de la section de conduit (20, 20", 20‴, 21, 21‴, 22, 63, 64) s'étend sur une distance (d3) d'environ 50 mm, et est de préférence configurée pour insérer la portion d'extrémité mâle (25) dans ladite portion d'extrémité femelle (26) de l'une des une ou plusieurs autres sections de conduit (20, 20", 20‴, 21, 21‴, 22, 63, 64), sur ladite distance (d3).

9. Section de conduit selon l'une quelconque des revendications précédentes, dans laquelle la première distance (d1) à partir de la première extrémité de la portion d'extrémité mâle (25) équivaut approximativement à la moitié de la longueur (d3) de la portion d'extrémité mâle (25).

10. Section de conduit selon l'une quelconque des revendications précédentes, comprenant en outre une seconde extrémité (26') avec une portion d'extrémité femelle (26) formée pour s'adapter autour d'une portion d'extrémité mâle (25) d'une autre section de conduit (20, 20", 20‴, 21, 21‴, 22, 63, 64) selon la revendication 1,
dans laquelle la portion d'extrémité femelle (26) comprend une ouverture de réception (28, 28', 28", 532, 62) espacée d'une seconde distance (d2) de la seconde extrémité (26'), et
dans laquelle l'ouverture de réception (28, 28', 28", 532, 62) est configurée de sorte que l'élément saillant (27, 27', 27", 42, 52, 61, 61') de l'autre section de conduit (20, 20", 20‴, 21, 21‴, 22, 63, 64) avec la portion d'extrémité mâle (25) passe à travers l'ouverture de réception (28, 28', 28", 532, 62) de la portion d'extrémité femelle (26) de la section de conduit (20, 20", 20‴, 21, 21‴, 22, 63, 64), lorsque la portion d'extrémité femelle (26) de la section de conduit (20, 20", 20‴, 21, 21‴, 22, 63, 64) est raccordée à la portion d'extrémité mâle (25) de l'autre section de conduit (20, 20", 20‴, 21, 21‴, 22, 63, 64).

11. Section de conduit (20, 20", 20‴, 21, 21‴, 22, 63, 64) configurée pour être raccordée à une ou plusieurs autres sections de conduit (20, 20", 20‴, 21, 21‴, 22, 63, 64) pour créer un système de conduit pour distribuer et/ou éliminer des substances gazeuses,
dans laquelle la section de conduit (20, 20", 20‴, 21, 21‴, 22, 63, 64) comprend une paroi externe circonférentielle (23, 411, 412, 511, 512) avec une surface interne et une surface externe,
dans laquelle la section de conduit (20, 20", 20‴, 21, 21‴, 22, 63, 64) est une section de conduit à double paroi ou une section de conduit concentrique à double paroi, comprenant une paroi interne circonférentielle (24, 45, 56, 65) qui est entourée par et espacée de la paroi externe circonférentielle (23, 411, 412, 511, 512),
dans laquelle la section de conduit (20, 20", 20‴, 21, 21‴, 22, 63, 64) comprend une seconde extrémité (26') avec une portion d'extrémité femelle (26) formée pour s'adapter autour d'une portion d'extrémité mâle (25) d'une autre section de conduit (20, 20", 20‴, 21, 21‴, 22, 63, 64) selon la revendication 1,
dans laquelle la portion d'extrémité femelle (26) de la section de conduit (20, 20", 20‴, 21, 21‴, 22, 63, 64) comprend une ouverture de réception (28, 28', 28", 532, 62) dans une paroi circonférentielle espacée d'une seconde distance (d2) de la seconde extrémité, et
dans laquelle l'ouverture de réception (28, 28', 28", 532, 62) est configurée de sorte que l'élément saillant (27, 27', 27", 42, 52, 61, 61') de l'autre section de conduit (20, 20", 20‴, 21, 21‴, 22, 63, 64) avec la portion d'extrémité mâle (25) passe à travers l'ouverture de réception (28, 28', 28'', 532, 62) de la portion d'extrémité femelle (26) de la section de conduit (20, 20", 20‴, 21, 21‴, 22, 63, 64), lorsque la portion d'extrémité femelle (26) de la section de conduit (20, 20", 20‴, 21, 21‴, 22, 63, 64) est raccordée à la portion d'extrémité mâle (25) de l'autre section de conduit (20, 20", 20‴, 21, 21‴, 22, 63, 64) .

12. Section de conduit selon la revendication 10 ou 11, dans laquelle la portion d'extrémité femelle (26) présente un diamètre extérieur qui est sensiblement égal à un diamètre extérieur de la paroi externe circonférentielle (23, 411, 412, 511, 512) de la section de conduit (20, 20", 20‴, 21, 21‴, 22, 63, 64).

13. Section de conduit selon l'une quelconque des revendications précédentes, dans laquelle la section de conduit (20, 20", 20‴, 21, 21‴, 22, 63, 64) est configurée pour fournir une partie de système de conduit comprenant au moins deux sections de conduit reliées entre elles, dans laquelle ladite partie de système de conduit comprend un diamètre extérieur sensiblement constant, en particulier une surface externe sensiblement continue et lisse.

14. Procédé de fabrication d'une section de conduit (20, 20", 20‴, 21, 21‴, 22, 63, 64), dans lequel le procédé comprend les étapes de :
- fourniture d'une section de conduit (20, 20", 20‴, 21, 21‴, 22, 63, 64) qui comprend une paroi externe circonférentielle (23, 411, 412, 511, 512) avec une surface interne (65) et une surface externe, dans lequel la section de conduit (20, 20", 20‴, 21, 21‴, 22, 63, 64) comprend une première extrémité (25') avec une portion d'extrémité mâle (25) formée pour rentrer dans une portion d'extrémité femelle (26) de l'une d'une ou plusieurs autres sections de conduit (20, 20", 20‴, 21, 21‴, 22, 63, 64), dans lequel la portion d'extrémité mâle (25) comprend une ouverture (29, 67, 531) espacée d'une première distance (d1) de la première extrémité (25'), dans lequel la section de conduit (20, 20", 20‴, 21, 21‴, 22, 63, 64) est une section de conduit à double paroi ou une section de conduit concentrique à double paroi, comprenant une paroi interne circonférentielle (24, 45, 56, 65) qui est entourée par et espacée de la paroi externe circonférentielle (23, 411, 412, 511, 512) ;
- fourniture d'un élément saillant (27, 27', 27", 42, 52, 61, 61') qui est supporté sur un élément élastique (44, 54, 66) ; et
- agencement de l'élément saillant (27, 27', 27", 42, 52, 61, 61') pour qu'il passe à travers l'ouverture (29, 67, 531) avec l'élément élastique (44, 54, 66) au niveau de l'intérieur de la portion d'extrémité mâle (25) de la section de conduit (20, 20", 20‴, 21, 21‴, 22, 63, 64).

15. Procédé de fabrication d'un système de conduit en liant des sections de conduit individuelles (20, 20", 20‴, 21, 21‴, 22, 63, 64) entre elles en plaçant la portion d'extrémité mâle (25) d'au moins une section de conduit (20, 20", 20‴, 21, 21‴, 22, 63, 64) selon l'une quelconque des revendications 1 à 9, à l'intérieur de la portion d'extrémité femelle (26) d'au moins une autre section de conduit (20, 20", 20‴, 21, 21‴, 22, 63, 64) selon l'une quelconque des revendications 10 à 12, dans lequel le procédé comprend l'étape de :
- positionnement de l'ouverture de réception (28, 28', 28", 532, 62) de la portion d'extrémité femelle (26) de sorte que l'élément saillant (27, 27', 27", 42, 52, 61, 61') de la portion d'extrémité mâle (25) passe à travers l'ouverture de réception (28, 28', 28'', 532, 62) de la portion d'extrémité femelle (26).
